# FASCICULE DE BREVET EUROPEEN

(11) **EP 0 407 322 B1**
(45) Date de publication et mention de la délivrance du brevet: **30.03.1994**
(21) Numéro de dépôt: 90450010.5
(22) Date de dépôt: 03.07.1990
(51) Int. Cl.: A01G 23/095

(54) **Elagueuse**
Entaster
Delimber

(30) Priorité: 04.07.1989 FR 8909153
(43) Date de publication de la demande: 09.01.1991
(73) Titulaire: Raffaello, Henri, 47700 Casteljaloux (FR)
(72) Inventeur: Raffaello, Henri, 47700 Casteljaloux (FR)
(74) Mandataire: Thébault, Jean-Louis

(56) Documents cités:
- FR-A- 2 275 993
- US-A- 3 183 951
- US-A- 3 353 575
- US-A- 4 781 228

## Description

La présente invention a trait à une élagueuse et, plus précisément, à une machine pour ébrancher les troncs d'arbre.

Par le document US-A-3 353 575, on connaît une élagueuse constituée d'un mât directement monté à l'extrémité de la flèche d'un engin forestier, à l'extrémité inférieure duquel sont fixés des moyens de blocage du mât à la base du tronc à ébrancher et le long duquel peuvent se deplacer en regard du tronc des moyens de coupe. Un tel dispositif ne peut traiter des arbres à tronc non rectiligne, car au cours du déplacement des moyens de coupe le long du tronc, l'inclinaison du mât ne peut s'adapter pour permettre auxdits moyens de coupe de traiter le tronc sur toute sa longueur.

L'invention a précisément pour but de proposer une machine capable de sectionner toutes les branches d'un tronc sur une hauteur déterminée, rapidement, efficacement et automatiquement, quelle que soit la forme du tronc.

A cet effet, l'invention a pour objet une élagueuse comprenant un bâti adaptable, par une liaison articulée et orientable, sur l'extrémité de la flèche d'un engin, notamment du type forestier, un dispositif monté sur le bâti et susceptible de bloquer ce dernier sur la base du tronc à élaguer, un mât d'élagage reposant sur le bâti et monté pivotant à son extrémité inférieure sur ledit bâti, des organes de coupe agencés de manière réglable en vue de ceinturer ledit tronc et montés coulissants le long du mât, des moyens de déplacement desdits organes de coupe le long du mât et un moyen d'immobilisation povisoire du mât par rapport audit bâti.

Une telle machine est particulièrement efficace, rapide et pratique d'emploi car elle permet, à l'aide du seul conducteur de l'engin, de sectionner sur une hauteur déterminée toutes les branches partant d'un tronc, au cours d'une seule passe des organes de coupe guidés par le mât qui se positionne de lui-même par rapport au tronc, l'intervention dudit conducteur de l'engin se bornant à la commande des moyens de blocage du bâti à la base du tronc, puis du placement correct des organes de coupe ceinturant le tronc et, enfin, du mouvement ascensionnel desdits organes de coupe.

D'autres caractéristiques et avantages ressortiront de la description qui va suivre d'un mode de réalisation d'une machine selon l'invention, description donnée à titre d'exemple uniquement et en regard des dessins annexés sur lesquels :
Figure 1 est une vue schématique en perspective d'un engin forestier dont la flèche est équipée d'une élagueuse conforme à l'invention ;
Figure 2 est une vue agrandie et en perspective de l'élagueuse de la figure 1 ;
Figure 3 illustre l'élagueuse de la figure 2 en action sur un tronc,
Figure 4 est une vue schématique d'une variante de montage des organes de coupe sur le mât, et
Figures 5 et 6 sont des vues de dessus respectivement de l'organe de coupe central fixe et des organes de coupe latéraux mobiles, auxquels sont associées des roues de réglage de l'écartement desdits organes vis à vis du tronc de l'arbre à ébrancher.

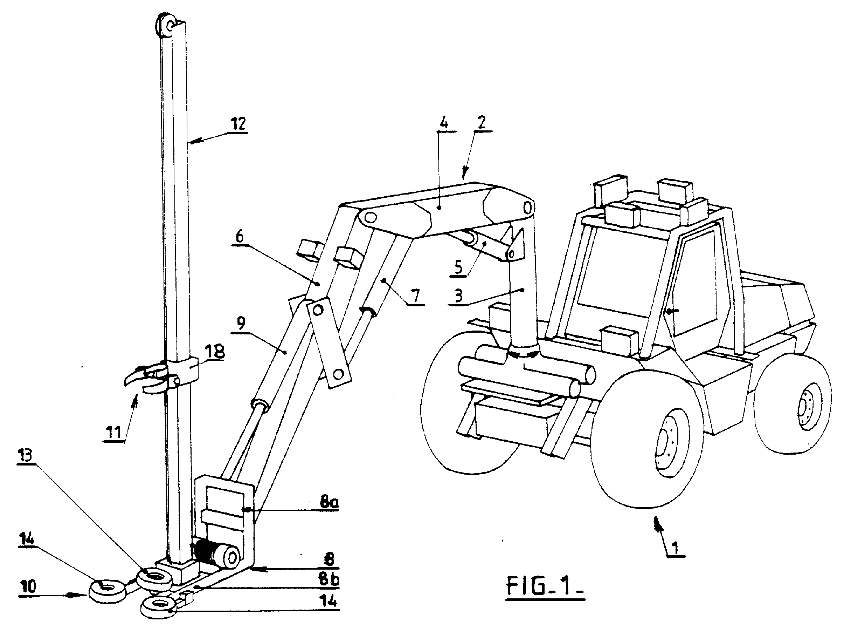

Sur la figure 1 on a représenté schématiquement en 1 un tracteur forestier muni, à la manière connue, d'une flèche 2 orientable et articulée à l'aide de systèmes hydrauliques tels que vérins ou moteurs. Plus précisément, dans le mode de réalisation représenté, la flèche 2 comprend un mât vertical 3 orientable sur 360°, un premier bras 4 relevable par un vérin hydraulique 5 et un second bras 6 actionnable par un vérin hydraulique 7.

La machine d'élagage proprement dite est constituée d'un bâti 8 en forme d'équerre dont la partie verticale 8a sert de liaison à l'extrémité du bras 6. Le bâti 8 est articulé autour d'un axe horizontal sur l'extrémité du bras 6 et peut pivoter autour de cet axe à l'aide d'un vérin hydraulique 9.

Le partie horizontale 8b du bâti porte les organes de l'élagueuse, à savoir, un dispositif de blocage de l'élagueuse sur le tronc à ébrancher, désigné d'une manière générale par la référence 10, et un dispositif de coupe comprenant des organes de coupe ou couteaux 11 montés coulissants le long d'un mât vertical 12.

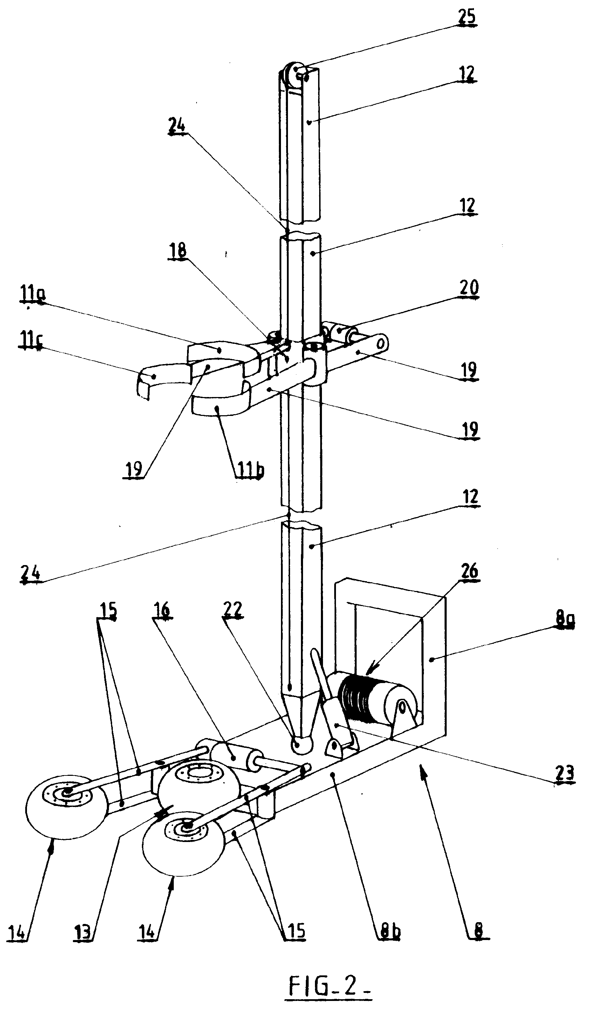

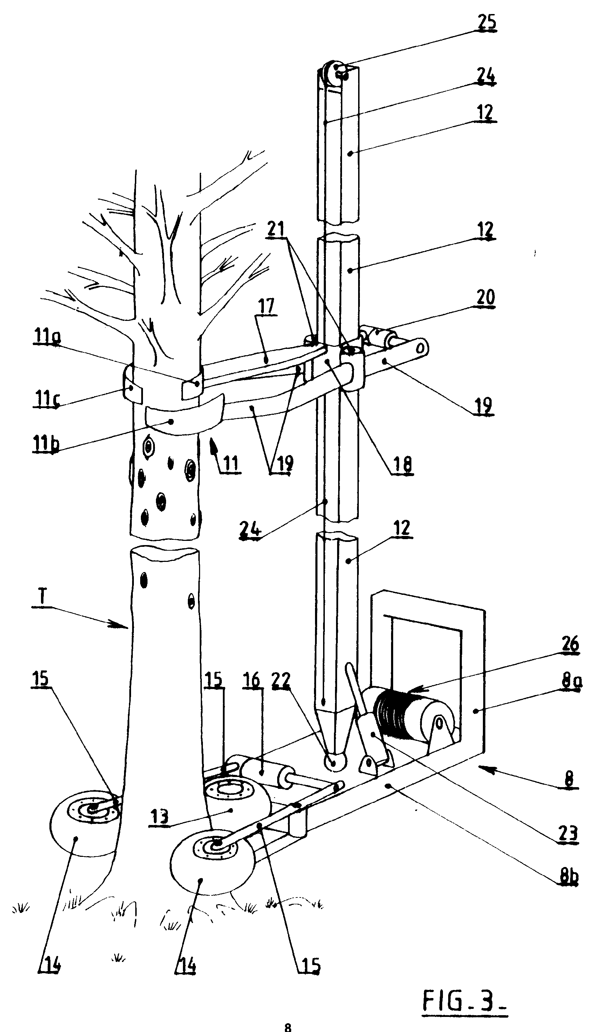

Dans le mode de réalisation représenté, le dispositif de blocage 10 (figures 2 et 3) est constitué d'une roue 13 d'axe vertical fixe, flanquée de deux roues latérales 14, également d'axe vertical mais montés à l'extrémité de deux bras de leviers 15 articulés sur le bâti 8 et commandés par un vérin hydraulique 16 solidaire du bâti 8.

Les trois roues 13 et 14 sont munies, de préférence, de bandages pneumatiques gonflables et sont disposées dans un même plan de façon à venir bloquer entre elles le tronc T d'un arbre à ébrancher.

Les organes de coupe 11 comportent trois couteaux en forme de lames cintrées 11a, 11b, 11c dont la face interne est susceptible de s'appliquer contre le tronc de façon à l'enserrer sur tout son pourtour. A cet effet, les lames 11a, 11b, 11c sont réparties autour du tronc, un peu à la manière des roues de blocage 13 et 14.

Le montage des trois lames est également similaire à celui des roues. L'une des lames (11a) est montée fixe à l'extrémité d'un bras sensiblement horizontal 17 solidaire d'un coulisseau 18 monté coulissant le long du mât 12.

La lame 11a est flanquée des deux lames latérales 11b et 11c, montées à l'extrémité de bras de levier 19 commandés par un vérin pneumatique 20 ou un autre système analogue et articulés sur le coulisseau 18 autour d'axes 21 parallèles au mât 12.

Le mât 12 repose sur le bâti 8 par une rotule 22 lui permettant une libre inclinaison dans toutes les directions de l'ordre de 20° environ.

Sur la figure 3 on a représenté en 23 un vérin hydraulique latéral d'immobilisation du mât 12 sur le bâti 8.

Le coulisseau 18 est déplacé par un filin 24 passant sur une poulie de renvoi 25 à l'extrémité supérieure du mât 12 et sur une autre poulie de renvoi (non représentée) à l'extrémité inférieure du mât, en regard d'un treuil 26 d'enroulement du filin 24, ce treuil étant muni d'un moteur de commande.

La commande du coulisseau 18 est assurée par un montage en boucle du filin 24, afin de tirer le coulisseau aussi bien vers le haut que vers le bas du mât.

Le fonctionnement du dispositif représenté et décrit ci-dessus est le suivant.

L'élagueuse est présentée au droit d'un tronc T à ébrancher. A cet effet, la flèche 2 de l'engin est correctement orientée ainsi que le bâti 8 de façon que le tronc T s'engage entre les deux roues 14 (en position d'écartement) jusqu'au contact avec la roue 13.

Pendant cette approche, les couteaux 11b, 11c sont écartés, le coulisseau 18 est en position basse le long du mât 12 lequel est convenablement orienté par rapport à l'arbre grâce au vérin d'immobilisation latérale 23 et au vérin 9.

Une fois le bâti calé sur le tronc grâce au vérin 16 qui applique les roues 14 contre le tronc, les couteaux 11b et 11c sont appliqués contre le tronc, grâce au vérin 20 et le piston du vérin 23 est rendu libre.

Le coulisseau 18 peut alors être tiré vers le haut du mât 12 grâce au treuil 26 sur la hauteur désirée de façon que les couteaux 11a, 11b, 11c sectionnent toutes les branches rencontrées. Les couteaux sont pratiquement au contact avec le tronc et ceinturent complètement ce dernier en se recouvrant légèrement afin de parfaitement sectionner toutes les branches sur leur trajet.

Les couteaux pourraient être tranchants aussi bien sur leur bord supérieur que sur leur bord inférieur, ce qui permettrait à la redescente du coulisseau 18 de parfaire le travail.

Le montage librement oscillant du mât 12 sur sa rotule 22 au cours de l'élagage permet aux couteaux de suivre le tronc T quelles que soient son inclinaison ou son profil, le mât suivant docilement l'inclinaison que lui donne les bras 17,19 au fur et à mesure que les couteaux 11a, 11b, 11c se déplacent le long du tronc.

La prévision de roues 13, 14 gonflées évite tout endommagement du tronc à l'accostage ainsi que du système racinaire. Les roues pourraient être remplacées par des patins, de préférence amortisseurs, ou analogues.

Lorsque le coulisseau 18 est revenu en position basse, le vérin 23 immobilise le mât 12 dans sa position, les couteaux 11b, 11c sont écartés ainsi que les roues 14. L'élagueuse peut être dégagée de l'arbre et présentée devant un autre tronc à élaguer.

Toutes ces opérations sont commandées par le conducteur de l'engin 1 depuis sa cabine, plusieurs arbres pouvant être traités sans avoir à déplacer l'engin, par la seule orientation de la flèche 2.

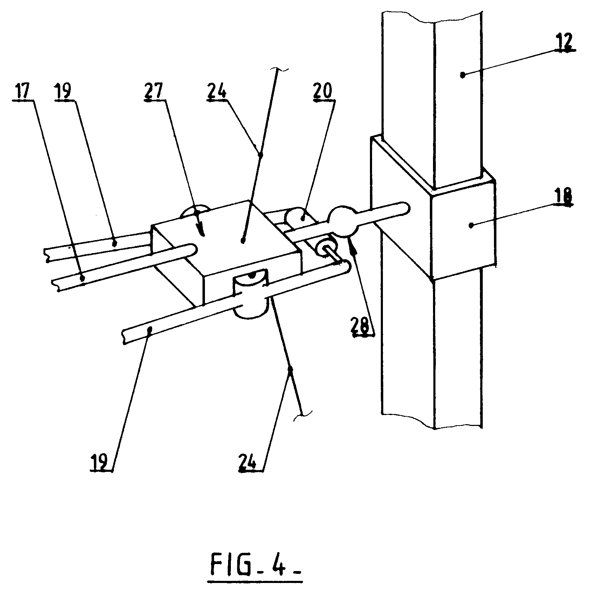

La figure 4 illustre une variante de montage des couteaux sur le coulisseau 18 mobile le long du mât 12. Dans cette variante, les bras porte-couteaux 17,19 ainsi que le vérin 20 sont portés par un chariot 27 relié au coulisseau 18 par une articulation à rotule 28, le filin de traction 24 étant fixé au chariot 27.

Un tel montage donne aux couteaux des degrés supplémentaires de liberté leur permettant d'encore mieux épouser le tronc au cours de leur montée et descente.

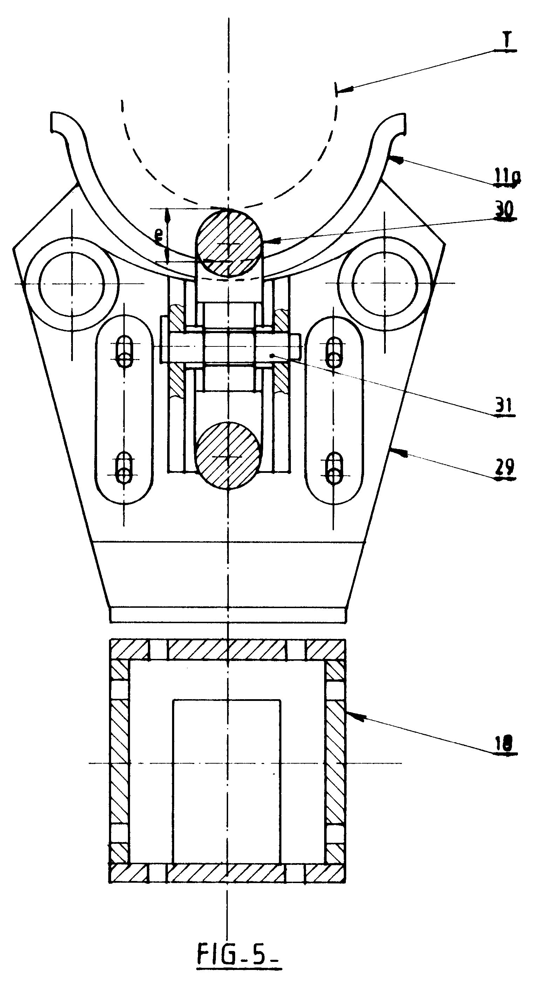

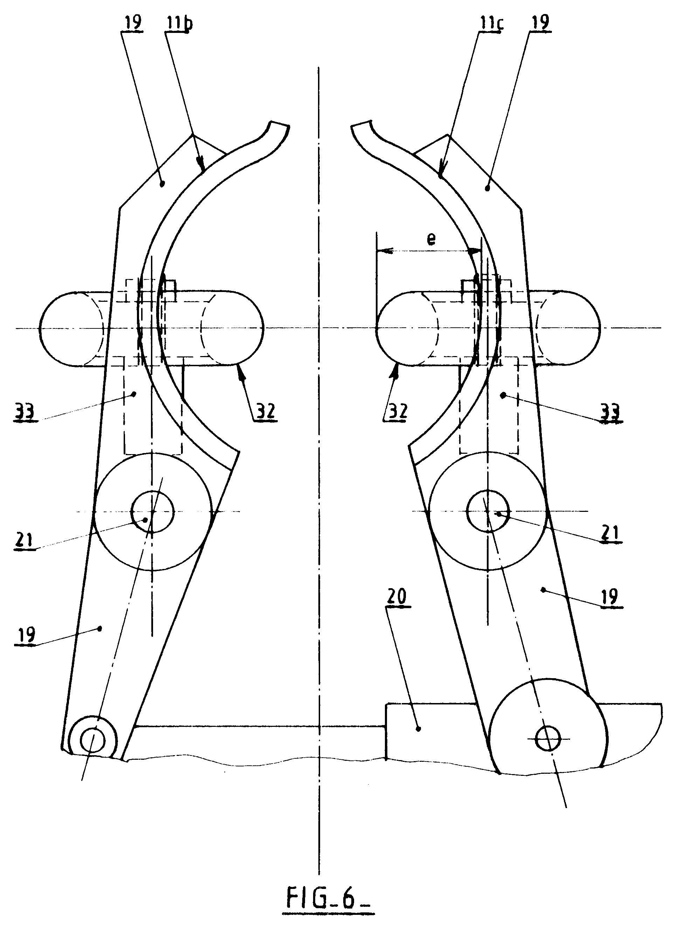

Les figures 5 et 6 illustrent une variante de réalisation du dispositif de coupe 11. Sur ces figures les organes homologues de ceux représentés sur les figures 1 à 3 portent les mêmes références numériques.

Suivant cette variante la lame de coupe centrale fixe 11a (figure 5) et les deux lames de coupe latérales mobiles 11b et 11c (figure 6) sont munies de roues associées de maintien des lames à une certaine distance, réglable, du tronc de l'arbre en cours d'ébranchage.

Sur la figure 5 on a représenté la lame ou couteau fixe 11a portée par un support 29 solidaire du coulisseau 18. Sur le support 29 est montée, réglable en position, une roue 30 dont l'axe 31 est disposé horizontalement et peut être, par un dispositif de réglage approprié, rapproché ou éloigné du couteau 11a de façon à s'interposer plus ou moins entre le couteau 11a et le tronc à ébrancher symbolisé en T. On a illustré en e l'écartement entre le couteau 11a et le tronc T déterminé par la roue 30. Avantageusement la roue 30 est un pneu à chambre à air gonflable, est montée folle et peut rouler le long du tronc sans l'endommager. La roue 30 est disposée en dessous du couteau 11a c'est-à-dire en aval de ce dernier qui sectionne les branches en montant le long du tronc.

Sur la figure 6 on a représenté les deux couteaux latéraux 11b et 11c, portés par les bras de levier 19 et articulés autour des axes 21. En dessous des couteaux sont disposées deux roues 32, analogues à la roue 30 et portées par deux bras-supports 33, d'axe horizontal et articulés sur les axes 21 en sorte de permettre aux roues 32 de s'interposer entre le tronc de l'arbre à ébrancher et les couteaux et de maintenir ces derniers à une distance e réglable par tous moyens appropriés.

Le dispositif de l'invention peut s'adapter à d'autres engins que celui représenté en figure 1, par exemple à un engin de travaux publics muni d'un bras tel qu'une tractopelle.

## Revendications

1. Elagueuse comprenant un bâti (8) adaptable, par une liaison articulée et orientable, sur l'extrémité de la flèche (2) d'un engin (1), notamment du type forestier, un dispositif (10) monté sur le bâti et susceptible de bloquer ce dernier sur la base du tronc à élaguer (T), un mât d'élagage (12) reposant sur le bâti (8) et monté pivotant à son extrémité inférieure sur ledit bâti, des organes de coupe (11) agencés de manière réglable en vue de ceinturer ledit tronc et montés coulissants le long du mât, des moyens (24 à 26) de déplacement desdits organes de coupe le long du mât et un moyen (23) d'immobilisation provisoire du mât (12) par rapport audit bâti (8).

2. Elagueuse suivant la revendication 1, caractérisée en ce que ledit dispositif de blocage du bâti (8) sur la base du tronc (T) à élaguer est constitué de trois roues (13,14) d'axe vertical, de préférence munies de bandages pneumatiques gonflables, l'une étant fixe (13) et les deux autres (14) étant montées mobiles et susceptibles d'être écartées ou rapprochées l'une de l'autre à l'aide d'un vérin (16) ou analogue.

3. Elagueuse suivant la revendication 1 ou 2, caractérisée en ce que les organes de coupe sont constitués par des couteaux ou lames (11a,11b,11c) de forme arquée et agencés en étant susceptibles de se déplacer le long du tronc à élaguer tout en le ceinturant complètement.

4. Elagueuse suivant la revendication 3, caractérisée en ce que lesdits couteaux ou lames comprennent un élément fixe (11a) et deux éléments (11b,11c) disposés en regard et montés mobiles en direction l'un de l'autre à l'aide d'un vérin (20) ou analogue.

5. Elagueuse suivant l'une des revendications 1 à 4, caractérisée en ce que les organes de coupe (11;11a,11b,11c) sont portés par un coulisseau (18) monté mobile le long du mât (12).

6. Elagueuse suivant l'une des revendications 1 à 4, caractérisée en ce que les organes de coupe (11a,11b,11c) et leurs moyens d'écartement (20) sont portés par un chariot (27) relié par une liaison à rotule (28) à un coulisseau (18) mobile le long du mât (12).

7. Elagueuse suivant l'une des revendications 1 à 6, caractérisée en ce que lesdits moyens de déplacement des organes de coupe (11) sont constitués par un système de filin (24) reliant ledit coulisseau (18) à un treuil moteur (26) porté par le bâti (8).

8. Elagueuse suivant l'une des revendications 1 à 6, caractérisée en ce qu'à chaque organe de coupe (11a,11b,11c) est associée une roue (30,32) positonnée de façon à rouler le long du tronc de l'arbre à ébrancher et montée de façon à maintenir à une distance déterminée réglable (e) dudit tronc lesdits organes de coupe.

9. Elagueuse suivant l'une des revendications 1 à 8, caractérisée en ce que ledit moyen d'immobilisation provisoire du mât (12) par rapport au bâti (8) est constitué par un vérin hydraulique (23).

## Patentansprüche

1. Entastvorrichtung, umfassend ein Gestell (8), das über eine gelenkige und orientierbare Verbindung an das Ende des Auslegers (2) einer Maschine (1), insbesondere einer Forstmaschine, anpaßbar ist, eine an dem Gestell montierte Vorrichtung (10), mittels der das Gestell an der Basis eines zu entastenden Stamms (T) festlegbar ist, einen Entastungsmast (12), der auf dem Gestell (8) abgestützt ist und an seinem unteren Ende auf dem Gestell schwenkbeweglich montiert ist, Schneidorgane (11), die einstellbar für das Umschließen des Stamms ausgebildet sind und gleitbeweglich längs des Masts montiert sind, Mittel (24 bis 26) zum Verlagern der Schneidorgane längs des Masts und ein Mittel (23) für die provisorische Festlegung des Masts (12) relativ zu dem Gestell (8).

2. Entastvorrichtung nach Anspruch 1, dadurch gekennzeichnet, daß die Vorrichtung zum Blockieren des Gestells (8) auf der Basis des zu entastenden Stamms (T) von drei Rädern (13, 14) mit vertikaler Achse gebildet wird, vorzugsweise versehen mit aufblasbaren pneumatischen Bandagen, von denen eines feststeht (13) und die beiden anderen (14) beweglich montiert sind und mittels eines Arbeitszylinders (16) od. dgl. abgespreizt oder angenähert werden können.

3. Entastvorrichtung nach Anspruch 1 oder 2, dadurch gekennzeichnet, daß die Schneidorgane von Messern oder Schneidern (11a, 11b, 11c) gekrümmter Form gebildet sind und so angeordnet sind, daß sie längs des zu entastenden Stamms unter vollständigem Umgurten desselben verlagerbar sind.

4. Entastvorrichtung nach Anspruch 3, dadurch gekennzeichnet, daß die Messer oder Schneiden ein festes Element (11a) und zwei Elemente (11b, 11c) umfassen, die gegenüber und beweglich in Richtung zueinander mit Hilfe eines Arbeitszylinders (20) o. dgl. angeordnet sind.

5. Entastvorrichtung nach einem der Ansprüche 1 bis 4, dadurch gekennzeichnet, daß die Schneidorgane (11; 11a, 11b, 11c) von einer Kulisse (18) getragen sind, die längs des Masts (12) beweglich ist.

6. Entastvorrichtung nach einem der Ansprüche 1 bis 4, dadurch gekennzeichnet, daß die Schneidorgane (11a, 11b, 11c) und ihre Abspreizmittel (20) von einem Schlitten (27) getragen sind, der über ein Kugelgelenk (28) mit einer längs des Masts (12) beweglichen Kulisse (18) verbunden ist.

7. Entastvorrichtung nach einem der Ansprüche 1 bis 6 , dadurch gekennzeichnet, daß die Verlagerungsmittel der Schneidorgane (11) von einem Seilsystem (24) gebildet werden, welche die Kulisse (18) mit einer Motorwinde (26) verbinden, welche von dem Gestell (8) getragen ist.

8. Entastvorrichtung nach einem der Ansprüche 1 bis 6, dadurch gekennzeichnet, daß jedem Schneidorgan (11a, 11b, 11c) ein Rad (30, 32) zugeordnet ist, das derart positioniert ist, daß es längs des Stamms des zu entastenden Baums rollt und derart montiertist, daß es die Schneidorgane in einem bestimmten einstellbaren Abstand (e) von dem Stamm hält.

9. Entastvorrichtung nach einem der Ansprüche 1 bis 8, dadurch gekennzeichnet, daß das Mittel zum provisorischen Festlegen des Masts (12) relativ zu dem Gestell (8) von einem hydraulischen Arbeitszylinder (23) gebildet ist.

## Claims

1. Pruning device comprising a frame (8) which can be fitted, by means of an articulated orientable connection, to the end of the boom (2) of a machine (1), particularly of the forestry type, a mechanism (10) mounted on the frame and able to lock the latter onto the base of the trunk to be pruned (T), a pruning mast (12) resting on the frame (8) and mounted so as to pivot, at its bottom end, on the said frame, cutting members (11) arranged so as to be adjustable for the purpose of surrounding the said trunk and mounted so as to slide along the mast, means (24 to 26) for moving the said cutting members along the mast and a means (23) for temporarily immobilising the mast (12) with respect to the said frame (8).

2. Pruning device according to Claim 1, characterised in that the said mechanism for locking the frame (8) onto the base of the trunk (T) to be pruned consists of three wheels (13, 14) with a vertical axis, preferably having inflatable pneumatic tyres, one being fixed (13) and the other two (14) being mounted so as to be movable and capable of being moved away from or towards each other by means of a cylinder (16) or similar.

3. Pruning device according to Claim 1 or 2, characterised in that the cutting members are formed by knives or blades (11a, 11b, 11c) curved in shape and arranged so as to be able to move along the trunk to be pruned whilst surrounding it completely.

4. Pruning device according to Claim 3, characterised in that the said knives or blades comprise a fixed component (11a) and two components (11b, 11c) disposed facing each other and mounted so as to be able to move towards each other by means of a cylinder (20) or similar.

5. Pruning device according to one of Claims 1 to 4, characterised in that the cutting members (11; 11a, 11b, 11c) are carried by a slide (18) mounted so as to be able to move along the mast (12).

6. Pruning device according to one of Claims 1 to 4, characterised in that the cutting members (11a, 11b, 11c) and their separation means (20) are carried by a carriage (27) connected by a pivot link (28) to a slide (18) movable along the mast (12).

7. Pruning device according to one of Claims 1 to 6, characterised in that the said means for moving the cutting members (11) are formed by a cable system (24) connecting the said slide (18) to a driving winch (26) carried by the frame (8).

8. Pruning device according to one of Claims 1 to 6, characterised in that, with each cutting member (11a, 11b, 11c) is associated a wheel (30, 32) positioned so as to travel along the trunk of the tree to be pruned and mounted so as to maintain the said cutting members at a given adjustable distance (e) from the said trunk.

9. Pruning device according to one of Claims 1 to 8, characterised in that the said means for temporarily immobilising the mast (12) with respect to the frame (8) is formed by a hydraulic cylinder (23).
